(19) Europäisches Patentamt

European Patent Office

Office européen des brevets

(11) **EP 4 663 404 A1**

(12) **EUROPEAN PATENT APPLICATION**
published in accordance with Art. 153(4) EPC

(43) Date of publication:
**17.12.2025 Bulletin 2025/51**

(21) Application number: **24780622.7**

(22) Date of filing: **28.03.2024**

(51) International Patent Classification (IPC):
**B32B 27/00** (2006.01)    **B32B 27/26** (2006.01)
**B32B 27/38** (2006.01)    **C08G 59/18** (2006.01)
**C08J 5/18** (2006.01)    **C08L 63/00** (2006.01)
**C08L 101/00** (2006.01)

(52) Cooperative Patent Classification (CPC):
**B32B 27/00; B32B 27/26; B32B 27/38;**
**C08G 59/18; C08J 5/18; C08L 63/00; C08L 101/00**

(86) International application number:
**PCT/JP2024/012608**

(87) International publication number:
**WO 2024/204522 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.03.2023 JP 2023054723**

(71) Applicant: **Toray Industries, Inc.**
**Tokyo 103-8666 (JP)**

(72) Inventors:
• **SHITO, Chihiro**
**Iyo-gun, Ehime 791-3193 (JP)**

• **SUGIYAMA, Yuri**
**Okazaki-shi, Aichi 444-8522 (JP)**
• **AOKI, Junichi**
**Iyo-gun, Ehime 791-3193 (JP)**
• **TAKASUKA, Kenta**
**Iyo-gun, Ehime 791-3193 (JP)**
• **MAEYAMA, Taiki**
**Iyo-gun, Ehime 791-3193 (JP)**
• **SUGIMOTO, Atsuki**
**Iyo-gun, Ehime 791-3193 (JP)**
• **FURUTA, Munehiro**
**Iyo-gun, Ehime 791-3193 (JP)**

(74) Representative: **Prüfer & Partner mbB**
**Patentanwälte · Rechtsanwälte**
**Sohnckestraße 12**
**81479 München (DE)**

(54) **RELEASE SHEET-PROVIDED RESIN FILM**

(57) In view of the above circumstances, the main object of the present invention is to provide a resin film that includes resin containing particles with diameters sufficiently large relative to the thickness of the resin film, which are disposed on one side of a release sheet, and that, in spite of it, suffers less from the expansion of dewetting spots, has high quality, and exhibits good releasing property from the release sheet.

A release sheet-attached resin film comprising a resin composition of the components [A] to [D] specified below and a release sheet with one side coated therewith, and having the feature (I) described below, wherein the component [D] is particles and accounts for 10 to 30 mass% of the resin composition:
[A] epoxy resin,
[B] thermoplastic resin
[C] curing agent,
[D] particles including large-diameter particles having diameters larger than 2A, wherein A denotes the average resin thickness in the resin film,

(I) the release resistance [X] (mN/20 mm) of the surface of the release sheet to be coated with the resin and the complex viscosity [Y] (MPa·s) of the resin composition at 25°C are within the ranges defined by the following equations (1)-1 to (1)-4.

EP 4 663 404 A1

[Mathematical formula 1]

$$500 \leqq X \leqq 4000 \qquad (1)\text{-}1$$

$$0.01 \leqq Y \leqq 2.1 \qquad (1)\text{-}2$$

$$Y \geqq 0.14\, e^{-7 \times 10^{-4}\, x} \qquad (1)\text{-}3$$

$$Y \leqq 3.00\, e^{-7 \times 10^{-4}\, x} \qquad (1)\text{-}4$$

**Description**

TECHNICAL FIELD

The present invention relates to a release sheet-attached resin film that contains large-diameter particles.

BACKGROUND ART

Conventionally, release sheet-attached resin films (hereinafter referred to as "resin films") that include resin films produced by stretching resin into thin layers have been widely used in electronic components, automobiles, adhesives, pharmaceuticals, and other fields because they are characteristically high in handleability and processability. In recent years, with the trend toward miniaturization, thinning, and weight reduction of components, there is an increasing demand for thinner resin films to be used in them. However, these resin films tend to suffer from quality deterioration problems associated with defects such as pinholes, which are minute holes formed in surfaces coated with resin, and dewetting spots, which are holes or dimples formed as a result of repulsion between the surface and the resin (hereinafter referred to as dewetting spots). Patent document 1, which focuses on adhesive films for semiconductors, proposes to specify the optimum surface energy of the substrate to be coated with resin in order to provide resin films that exhibit both high thin-film coatability and high releasing property and suffer less from the formation of pinholes and dewetting spots. It proposes to control the film thickness at 10 $\mu$m or less and to use particulate fillers having a maximum particle diameter of 25 $\mu$m or less.

Furthermore, with the recent advancement of multifunctional products, the competition to differentiate products through new functions and added value has intensified, and imparting new functions to the resin film itself has become an important new challenge.

To solve these issues, various technologies have been proposed. Broadly categorized, these include methods of modifying the surfaces of resin films by sputtering, surface treatment, or the like and methods of imparting functions by mixing functional fillers directly into resin. In the latter case, in particular, different functions can be developed depending on the type and size of the filler applied, allowing for a wide range of functions to be added to the resin films.

Furthermore, in the case of a resin film containing a filler, voids are likely to occur if the filler has volatile components. This leads to blistering or delamination and makes it difficult to perform uniform, high-quality resin coating. When the filler is in particle form, it is common practice to use particles with diameters smaller than the resin thickness. However, when resin films are used in a laminated form for the purpose of imparting specific functions such as thermal conductivity, particulate fillers with diameters larger than the resin thickness are used occasionally. In the case where such particulate fillers having large diameters are added, pinholes or dewetting spots tend to form around filler particles during or after the step in which resin is added to the release sheet, and this leads to the problem of deterioration in resin film quality. Patent document 2 proposes the use of a reverse roll coater method to appropriately adjust the B/C ratio (the ratio between the coating roll (B roll) speed and the back roll (C roll) speed) in order to provide a high-quality resin film that contains coarse particles with diameters larger than the resin thickness.

PRIOR ART DOCUMENTS

PATENT DOCUMENTS

    Patent document 1: Japanese Unexamined Patent Publication (Kokai) No. 2012-162680
    Patent document 2: Japanese Unexamined Patent Publication (Kokai) No. 2016-160367

SUMMARY OF INVENTION

PROBLEMS TO BE SOLVED BY THE INVENTION

If the resin in use contains particles with particle diameters larger than the resin thickness, not only dewetting spots as described above are likely to be formed when the resin film is laid on one side of the release sheet, but also the dewetting spots tend to become larger over time, resulting in a decline in resin film quality. Therefore, it is necessary either to increase the viscosity of the resin to suppress flowability or to modify the surface properties of the release sheet to retain the resin more easily. However, if the resin viscosity is increased in an attempt to enhance its retention on the release sheet, it tends to lead to reduced releasing property of the resin from the release sheet. Patent document 1 insists that the invention proposed therein achieves both good thin film coatability and good releasing property from the substrate and that particulate fillers with a maximum diameter exceeding twice the film thickness can be used. However, it describes only that the use of a constitution including particles with diameters less than twice the film thickness is preferable and does not address any specific problem that can occur when applying particles that have significantly large diameters relative to the film thickness, or any solutions thereto. Patent document 2 discloses the use of particles including coarse particles with diameters more than 2A $\mu$m, where A $\mu$m denotes the resin thickness of the resin film. However, Patent document 2 gives no description or suggestion about a problem relating to the formation of dewetting spots that may be caused by such coarse particles. According to Patent document 2, furthermore, the amount of particles including coarse ones should account for a small part in a formulation of components that can form a high quality resin film, and those coarse particles should be included in either of two types of particles in use and account for only 2 mass% or less thereof, thereby avoiding the inclusion of a high content of coarse particles in the formulation. However, it proposes no technical teaching for using a resin of a constitution containing coarse particles in an amount more than that specified above for the purpose of obtaining a high quality resin film.

Thus, the prior art documents do not recognize the specific problem with dewetting spots that uniquely occurs in a resin film containing particles with diameters larger than the film thickness, nor do they disclose any specific method for suppressing their formation. As a result, it has still been difficult to obtain a resin film that suffers little from expansion of dewetting spots, has high quality, and maintains good releasing property from release sheets.

In view of the above circumstances, the main object of the present invention is to provide a resin film that includes resin containing particles with diameters sufficiently large relative to the thickness of the resin film, which are disposed on one side of a release sheet, and that, in spite of it, suffers less from the expansion of dewetting spots, has high quality, and exhibits good releasing property from the release sheet.

MEANS OF SOLVING THE PROBLEMS

The present invention adopts the following constitution to solve the problem described above. Here, a "large-diameter particle" as referred to for the present invention means a particle having a diameter larger than twice the average resin thickness A in the resin composition disposed on one side of a release sheet, that is, a particle having a diameter larger than 2A (2 × A).

1. A release sheet-attached resin film comprising a resin composition of the components [A] to [D] specified below and a release sheet with one side coated therewith, and having the feature (I) described below, wherein the component [D] is particles and accounts for 10 to 30 mass% of the resin composition:

[A] epoxy resin,
[B] thermoplastic resin
[C] curing agent,
[D] particles including large-diameter particles having diameters larger than 2A, wherein A denotes the average resin thickness in the resin film,

(I) the release resistance [X] (mN/20 mm) of the surface of the release sheet to be coated with the resin and the complex viscosity [Y] (MPa·s) of the resin composition at 25°C are within the ranges defined by the following equations (1)-1 to (1)-4,

[Mathematical formula 1]

$$500 \leqq X \leqq 4000 \qquad (1)\text{-}1$$

$$0.01 \leqq Y \leqq 2.1 \qquad (1)\text{-}2$$

$$Y \geqq 0.14 \, e^{-7 \times 10^{-4} \, x} \qquad (1)\text{-}3$$

$$Y \leqq 3.00 \, e^{-7 \times 10^{-4} \, x} \qquad (1)\text{-}4$$

2. A release sheet-attached resin film as set forth in the paragraph 1, wherein the particles of [D] show a particle diameter distribution in which large-diameter particles account for a number based proportion of 10% to 30% of the total number of particles of [D].

3. A release sheet-attached resin film as set forth in either the paragraph 1 or 2, wherein the particles of [D] are inorganic particles.

4. A release sheet-attached resin film as set forth in any one the paragraphs 1 to 3, wherein the particles of [D] have spherical shape.

5. A release sheet-attached resin film as set forth in any one of the paragraphs 1 to 4, wherein the average resin thickness A in the resin film is 50 μm or less.

6. A release sheet-attached resin film as set forth in any one of the paragraphs 1 to 5, further having the feature (II) and the feature (III) specified below:

(II) the resin coverage rate of the release sheet-attached resin film immediately after coating is 95% or more, and the dewetting expansion rate on the release sheet-attached resin film expressed by the following equation (2) is 6 or less, and

[Mathematical formula 2]

$$\text{dewetting expansion rate} = \frac{\text{dewetting spot area 24 hours after coating of release sheet with resin composition}}{\text{dewetting spot area immediately after coating}} \qquad (2)$$

(III) the release rate of the resin composition from the release sheet is 95% or more.

ADVANTAGEOUS EFFECTS OF THE INVENTION

The present invention serves to provide a resin film that includes a resin containing a required amount of large-diameter particles larger than 2A, where A is the average resin thickness, with the resin disposed on one side of a release sheet, and that suffers less from the expansion of dewetting spots to ensure high quality and exhibits good releasing property from the release sheet.

DESCRIPTION OF PREFERRED EMBODIMENTS

There are no particular restrictions on the epoxy resin [A] to use in the release sheet-attached resin film according to the present invention and it may be either in liquid or solid form. Examples thereof include amine type epoxy resins, bisphenol type epoxy resins, phenol novolac type epoxy resins, cresol novolac type epoxy resins, resorcinol type epoxy resins, phenol aralkyl type epoxy resins, naphthol type epoxy resins, dicyclopentadiene type epoxy resins, epoxy resins having biphenyl skeletons, isocyanate modified epoxy resins, tetraphenylethane type epoxy resins, and triphenylmethane type epoxy resins.

Among these, the use of an amine type epoxy resin or a bisphenol type epoxy resin is preferable because they have a good balance between heat resistance and adhesiveness. Furthermore, these epoxy resins may be self-curable ones that cure under heat or may contain a curing agent, a curing accelerator, or the like.

As such amine type epoxy resins, trifunctional or tetrafunctional amine type epoxy resins can be used suitably, and examples thereof include tetraglycidyl diaminodiphenylmethane, triglycidyl aminophenol, triglycidyl aminocresol, and tetraglycidyl xylenediamine, as well as halogen-substituted, alkynol-substituted, and hydrogenated derivatives thereof.

These epoxy resins may be used singly or in combination of appropriate ones thereof. The combination of a glycidylamine type epoxy resin with a difunctional glycidyl ether type epoxy resin is particularly preferable because it is high in both heat resistance and moisture absorption resistance.

A bisphenol type epoxy resin is formed through glycidylation of the two phenolic hydroxyl groups of a bisphenol compound and examples thereof include bisphenol A type, bisphenol F type, bisphenol AD type, and bisphenol S type epoxy resins, as well as halogen-substituted, alkyl-substituted, or hydrogenated derivatives thereof. Furthermore, not only monomeric forms but also high molecular weight forms composed of multiple repeating units can also be suitably used.

There are no particular restrictions on the thermoplastic resin [B] to use in the release sheet-attached resin film according to the present invention. In the case where the epoxy resin [A] is in liquid form, it is dissolved in the epoxy resin during preparation of a resin composition and processed into a resin composition together with the epoxy resin. Specific examples of favored compounds as the thermoplastic resin [B] include polyethersulfone, polysulfone, polyimide, polyetherimide, polycarbonate, polyether ether sulfone, polyvinyl formal, and polymethyl methacrylate.

There are no particular restrictions on the curing agent [C] to use for the resin present in the release sheet-attached resin film according to the present invention as long as it is a compound having an active group that can react with an epoxy group. Examples of the curing agent include aromatic amines, dicyandiamides, and dihydrazides of dibasic acids, which may be used singly or in combination with others. Of these, aromatic amines are preferable and specific examples thereof include metaphenylenediamine, diaminodiphenylmethane, diaminodiphenyl sulfone, and metaxylylenediamine.

These curing agents may be used singly or in combination of appropriate ones thereof. Aromatic amines are particularly preferable because they can serve to impart heat resistance to the cured resin.

The particles [D] used in the release sheet-attached resin film according to the present invention contain large-diameter particles having diameters larger than 2A, where A denotes the average resin thickness in the resin film, and these particles are at least partly insoluble in the epoxy resin composition. Hereinafter, the large-diameter particles that have diameters larger than 2A, where A denotes the average resin thickness in the resin film, will be referred to simply as particles [D]. Examples of such particles include metal particles, rubber particles, thermoplastic resin particles, inorganic particles, and any other appropriate particles, but in general, particles that are insoluble in the epoxy resin composition and remain as particles in the cured resin are used. Examples of suitable materials include acrylate, polyamide, polyimide, polyaramid, polyester, polycarbonate, polyphenylene sulfide, polybenzimidazole, polyetherimide, polysulfone, polyethersulfone, polyetherether ketone, polyacetylene, polyaniline, polypyrrole, polythiophene, polyisothianaphthene, polyethylene dioxythiophene, carbon, silica, titania, alumina, zirconia, tungsten trioxide, vanadium pentoxide, barium titanate, potassium titanate, and various fine metal particles. Furthermore, these particles may be a combination of particles of two or more different materials. Examples thereof include particle cores of an inorganic material or an organic material that are coated with a metal material.

For this embodiment, multiple types of particles may be used together, and a particulate filler free of large-diameter particles may be used in addition to the particles [D]. Here, whether large-diameter particles are present or not should be a separate evaluation item to be examined for each particle type.

The particles [D] account for 10 to 30 mass% of the total mass of the resin composition. It is preferable that the particles contained in the resin composition account for 25 mass% or less. In regard to the shape of the particles, they are preferably spherical because it serves to prevent deterioration in the quality of the resin film. For the present invention, particles are regarded as spherical when 40 particles are sampled and observed under a microscope and those with a roundness of 1.1 or less account for 90% or more. The roundness is calculated by dividing the maximum radius of a particle by its minimum radius in accordance with JIS B 0621:1984. Particles used for the present invention should include large-diameter particles, but whether or not a particle is regarded as a large-diameter particle is judged based on a comparison with the thickness of the resin disposed on one side of the release sheet in the resin film. Specifically, a particle is regarded as a large-diameter particle if it has a diameter larger than 2A (in $\mu$m, etc.), where A (in $\mu$m, etc.) denotes the average resin thickness. For the present invention, large-diameter particles contained in the particles [D] can work to realize the development of a specific function attributed to the large-diameter particles if their content is only 1% or more of the total amount of the particles [D] in a number based particle diameter distribution, but the content is preferably 10% or more and preferably 30% or less as the upper limit in order to work with sufficient effectiveness. In regard to the optimum upper limit, the content of large-diameter particles is more preferably 25% or less, and still more preferably 20% or less.

The content of large-diameter particles (>2A) as referred to herein can be determined from observation of 2,000 or more particles in an appropriately selected area of the resin film that is observed under a microscope at a magnification of 300x. If the content of large-diameter particles in the particles [D] used for the present invention is less than 10% on a number basis, it may be difficult to realize sufficient functionality when layers of the resin film are laminated. On the other hand, if they account for more than 30% by number of the total number of the particles [D], the probability of contact between particles in the resin film will increase, possibly leading to degradation in the quality of the resin film.

The particle diameters to use for determining the particle diameter distribution, that is, the diameters of individual particles selected for calculation for the present invention, are determined by selecting observable particles under a microscope, measuring the average of the maximum and minimum diameters of each individual particle, and calculating the particle diameter distribution for those particles having average diameters of 1 $\mu$m or more. In addition, it is preferable for the particles [D] to have a density of 1.0 g/cm$^3$ or more and 2.0 g/cm$^3$ or less.

To obtain particles with required diameters, classification may be performed as necessary using a dry classifier (such as TTSP Separator, manufactured by Hosokawa Micron Corporation).

Furthermore, it is preferable that the particles to use for the present invention can be dispersed in the resin by ordinary mixing operations.

The resin composition to use for the resin film according to the present invention may optionally contain, in addition to the components listed above, one or more other components selected from the group consisting of liquid thermosetting resins other than epoxy resin, curing accelerators, flame retardants, and silane coupling agents.

Next, the feature (I) is described below. The relationship between the release resistance [X] of the surface of the release sheet to be coated with a resin for the present invention and the complex viscosity [Y] of the resin composition at 25°C is such that they are within the ranges defined by the following equations (1)-1 to (1)-4.

[Mathematical formula 3]

$$500 \leqq X \leqq 4000 \qquad (1)\text{-}1$$

$$0.01 \leqq Y \leqq 2.1 \qquad (1)\text{-}2$$

$$Y \geqq 0.14\, e^{-7 \times 10^{-4}\, x} \qquad (1)\text{-}3$$

$$Y \leqq 3.00\, e^{-7 \times 10^{-4}\, x} \qquad (1)\text{-}4$$

Furthermore, it is more preferable that the relationship between the release resistance [X] of the surface of the release sheet to be coated with a resin for the present invention and the complex viscosity [Y] of the resin composition at 25°C be such that they are within the ranges defined by the following equations (1)-1, (1)-2', (1)-3, and (1)-4'.

[Mathematical formula 4]

$$500 \leqq X \leqq 4000 \qquad (1)\text{-}1$$

$$0.01 \leqq Y \leqq 1 \qquad (1)\text{-}2'$$

$$Y \geqq 0.14\, e^{-7 \times 10^{-4}\, x} \qquad (1)\text{-}3$$

$$Y \leqq 1.40\, e^{-7 \times 10^{-4}\, x} \qquad (1)\text{-}4'$$

The release resistance [X] of the surface of the release sheet to be coated with a resin as referred to here is a value that is measured as described below. A rectangular sample of a release sheet having a width of 250 mm and a length of 90 mm is fixed on a flat surface, and a removable adhesive formed of an acrylic emulsion is applied to the sample face. The application operation is performed in such a manner that the thickness of the coating liquid is 125 $\mu$m in a wet state immediately after the coating operation. The removable adhesive is baked and dried immediately after the coating operation by heating it at 100°C for 120 seconds. Next, a PET film is attached onto the adhesive-coated surface of the dried release sheet. For example, a rubber roller of 7.5 kg is moved back and forth once to allow the film is to be attached under its weight. Then, except for allowing them to stand for 30 minutes in an atmosphere at 23°C and 50% RH, cutting out a test specimen having a width of 20 mm and a length of 250 mm, and adopting a release speed of 1,000 mm/min, the same procedure as specified in JIS Z 0237:2009 "Testing Methods of Removable Adhesive Tapes and Removable Adhesive Sheets" is carried out to perform 180° peel test. The simple average of the measured force values is adopted to represent the release resistance.

Furthermore, the complex viscosity [Y] of a resin composition at 25°C referred to herein is determined by simply heating a test specimen from 10°C at a temperature ramp rate of 2°C/min between parallel plates in a dynamic viscoelasticity measuring apparatus (for example, ARES-G2, manufactured by TA Instruments), drawing a viscoelasticity curve based on measurements taken at a frequency of 77.25 Hz and a plate gap of 0.5 mm, and reading the complex viscosity value at 25°C. Here, each of the equations (1) is constructed from a semilogarithmic graph with a logarithmic Y-axis in which the release resistance [X] is plotted on the X-axis while the complex viscosity [Y] is plotted on the Y-axis, where the Y-axis is on a logarithmic scale. In the equations (1)-2, (1)-2', (1)-4, and (1)-4', the coefficient in the exponent of the exponential function e represents the slope of the curve given by these equations on semilogarithmic graphs with a logarithmic Y-axis. This coefficient in the exponent of each exponential function e is also expressed as described below using E to indicate the exponent of 10. For examples, "-7E-04" means -0.0007 and represents the slope of the curve given by these equations on a semilogarithmic graph with a logarithmic Y-axis.

The resin composition used for the present invention contains the particles [D] as an essential component as described above, and it is preferable that in a number based particle diameter distribution, 75% or less of the particles have diameters larger than the average resin thickness A of the resin disposed on one side of a release sheet. In such cases, when the release sheet is placed, facing downward, a height difference occurs between the resin located above the particles and the resin located laterally beside the particles etc. instead of above them, making them more susceptible to the enlarging force of the resin composition. As a result, dewetting spots are more likely to occur and expand over time. To suppress the formation and expansion of dewetting spots, it is preferable to increase the release resistance [X] of the release sheet to a certain level. The use of a release sheet with a small release resistance [X] is generally thought to be favorable to ensure easy release from the resin film, but for the present invention, which uses large-diameter particles, an excessively small release resistance [X] leads a decrease in force to retain the resin composition on the release sheet, causing an increase in the enlarging force of the resin composition. As a result, many dewetting spots will be formed and the expansion of dewetting spots will be accelerated over time, leading to degradation in the quality of the resin film. For the present invention, it has been found that the use of a resin composition having a complex viscosity [Y] increased to a certain level is preferable in order to suppress the enlarging force of the resin composition to prevent the formation and expansion of dewetting spots. Conventional technological knowledge will simply suggest that in the case of formulations containing large-diameter particles, resin discontinuity due to height difference described above should be prevented first by using a resin composition with a low complex viscosity [Y]. For the present invention, however, it has been found that if the complex viscosity [Y] of the resin composition is too low, the resin composition will start flowing easily to cause an increase in enlarging force, thus leading to easy formation of dewetting spots and accelerated expansion of the dewetting spots over time and resulting in a resin film with poor quality.

Furthermore, as the adsorption force of the particles [D] toward the resin composition increases, their affinity with the resin composition becomes stronger to help suppress the formation and expansion of dewetting spots. Thus, it is preferable for the adsorption force of the particles [D] to be 0.3 mN/m or more and 17.8 mN/m or less, more preferably 0.5 mN/m or more and 10 mN/m or less, and still more preferably 1.0 mN/m or more and 5 mN/m or less. Here, the adsorption force referred to above is measured by applying an adhesive to the probe side of the Si cantilever of an AFM (for example, scanning probe microscope SPM, manufactured by Bruker), attaching a particle to it, leaving it to stand for one hour to ensure firm fixation, bringing it into contact with a sapphire substrate cleaned with ethanol, and taking measurements under the conditions of a retention time of 0 second, a loading speed of 300 nm/s, room temperature, and humidity of 20% to 40%.

On the other hand, if the release resistance [X] of the release sheet is too large, the releasing property of the resin from the release sheet will deteriorate. Likewise, if the complex viscosity [Y] of the resin composition is higher than a certain appropriate level, the resin becomes so stiff that it becomes low in handleability during operation of laying it onto the release sheet and also deteriorate in releasing property from the release sheet. Therefore, to achieve both high quality and good releasing property to provide an excellent resin film, it is necessary to appropriately control both the release resistance [X] of the release sheet and the complex viscosity [Y] of the resin composition.

Specifically, if the release resistance [X] of the release sheet is controlled at 500 mN/20 mm or more, it serves to suppress the enlarging force of the resin composition and thereby prevent the expansion of dewetting spots in the resin. On the other hand, if the release resistance [X] of the release sheet is controlled at 4,000 mN/20 mm or less, it serves to improve the releasing property of the resin from the release sheet. Meanwhile, if the complex viscosity [Y] of the resin composition at 25°C is controlled at, specifically, 0.01 MPa·s or more, it serves to suppress the enlarging force of the resin composition and prevent the expansion of dewetting spots on the resin film. It is preferably 0.08 MPa·s or more. On the other hand, if the complex viscosity [Y] is controlled at 2.1 MPa·s or less, it serves to maintain a high handleability during the operation of disposing it on the release sheet. From such a point of view, it is more preferable that the complex viscosity [Y] be 1 MPa·s or less.

In addition to the above requirements, it is important to ensure a good balance between the release resistance [X] of the release sheet and the complex viscosity [Y] of the resin composition at 25°C. For example, a combination of a release resistance [X] of 500 mN/20 mm and a complex viscosity [Y] of 0.01 MPa·s, which are within the ranges of the release resistance [X] and the complex viscosity [Y] specified above, does not work sufficiently to allow the release sheet to suppress the enlarging force of the resin composition, leading to expansion of dewetting spots and degraded quality. On the other hand, for example, a combination of a release resistance [X] of 4,000 mN/20 mm and a complex viscosity [Y] of 2.1 MPa·s, which are within the ranges of the release resistance [X] and the complex viscosity [Y] specified above, leads to a deterioration in the releasing property of the resin from the release sheet. However, in a Y-axis semilogarithmic graph with the release resistance [X] as the X-axis and the complex viscosity [Y] as the Y-axis with a logarithmic scale, among the region defined by the above-mentioned respective ranges of the release resistance [X] and the complex viscosity [Y], when an embodiment is adopted in which a combination of [X] and [Y] that satisfies both the relation $Y \geq 0.14e^{-7E-04X}$ (1)-3 and the relation $Y \leq 3.00e^{-7E-04X}$ (1)-4, which is a range excluding the range where both the release resistance [X] and the complex viscosity [Y] are small values, or the range where both the release resistance [X] and the complex viscosity [Y] are large values, is obtained, a resin film having sufficiently good quality and good releasing property can be obtained.

It is preferable that the release sheet-attached resin film according to the present invention have an average resin thickness A of 50 μm or less. This thickness is determined by spreading the resin on a release sheet to prepare a resin film, controlling its temperature at or below the glass transition temperature of the resin to maintain it in a glass state, measuring the thickness of the resin film at 10 arbitrarily selected points using a micrometer (for example, coolant proof micrometer MDC-25MX, manufactured by Mitutoyo Corporation), calculating the average, and calculating its difference from the average of thickness measurements taken at 10 arbitrarily selected points on a separate release sheet (which may be prepared by removing the resin from the release sheet-attached resin film). The average of the thickness measurements (N = 10) of the release sheet taken in advance is subtracted from the average of the thickness measurements (N = 10) of the resin film taken as described above, and the difference is adopted as the average resin thickness A. If the average resin thickness A is adjusted to 50 μm or less, it serves to provide thin and lightweight components even when they are produced by laminating such resin films. Here, the lower limit of the average resin thickness A is not particularly limited, but it is preferably 5 μm or more. This means that the large-diameter particles contained in the particles [D] preferably have diameters of 10 μm or more. Furthermore, the maximum diameter of the large-diameter particles is preferably 120 μm or less.

It is preferable that as specified in the feature (II), the release sheet-attached resin film according to the present invention have a resin coverage rate of 95% or more immediately after coating and that the dewetting expansion rate on the release sheet-attached resin film, which is expressed by the equation (2) given below, be 6 or less.

[Mathematical formula 5]

$$\text{dewetting expansion rate} = \frac{\text{dewetting spot area 24 hours after coating of release sheet with resin composition}}{\text{dewetting spot area immediately after coating}} \qquad (2)$$

For the present invention, the resin coverage rate of a release sheet-attached resin film is determined by observing a sample from the resin film side, examining the surface of the resin film at a magnification of 50x under a microscope, measuring the area of the part of the release sheet covered by the resin composition in a 10 mm × 10 mm unit square region of the resin film arbitrarily selected in the field of view under the microscope, and calculating the ratio of the measured area to the area of the aforementioned unit square region.

Meanwhile, the dewetting expansion rate in a resin film prepared by coating a release sheet with a resin composition can be determined by observing its surface at a magnification of 200x under a microscope, examining the region of a single arbitrarily selected dewetting spot for fixed-point analysis, and calculating the ratio of the dewetting spot region measured 24 hours after the coating operation performed above to the area of the dewetting spot region measured immediately after the coating operation, which can be expressed by the equation (2) given above. Ten dewetting spot regions are selected arbitrarily and observed to determine area ratios as defined above, and their average is adopted as the dewetting expansion rate.

The dewetting expansion rate is preferably 6 or less. If it is more than 6, uncoated areas may be left and lead to defects and failure to obtain required properties when the release sheet-attached resin film is adhered on a substrate, It is more preferable for the expansion rate to be 4 or less, more preferably 3 or less.

Here, the parameters involved in the feature (II) can also be determined by using the same release sheet and resin composition as used in the release sheet-attached resin film under examination, and coating the above release sheet with the above resin composition using a knife coater, followed by taking measurements by the above method immediately after coating and 24 hours after coating.

For the release sheet-attached resin film according to the present invention, it is also preferable that as specified in the feature (III), the release rate of the resin composition from the release sheet be 95% or more. The release rate of the resin composition from the release sheet is measured as described below. The resin film is cut into a strip with a width of 25 mm and a length of 300 mm to prepare a test specimen. Then, a piece of evaluation tape (for example, Dampron Tape No. 3201R, manufactured by Nitto Denko Corporation) having the same shape as the test specimen with a width of 25 mm and a length of 300 mm cut out above and having an adhesive strength of 8.1 N/25 mm is laminated onto the resin-coated side of the test specimen under a 2 kg rubber roller moved back and forth once. A stainless steel support is adhered to the evaluation tape-attached surface of the test specimen using double-sided tape. Then, the support is mounted on a tensile tester, and the evaluation tape is peeled off at an angle of 90° to the longitudinal direction of the test specimen at a pulling speed of 10,000 mm/min in an atmosphere at 25°C and 50% RH. After peeling, the entire test specimen is photographed, and the image data are binarized, followed by measuring the area of the exposed portion of the release sheet, which is not covered by the resin composition, and dividing it by the overall area of the test specimen to give the release rate. It is preferable that as specified in the feature (III), the release sheet-attached resin film according to the present invention have a release rate of 95% or more, particularly preferably 98% or more. If the release rate is less than 95%, uncoated regions that will resulting in defects may occur when the release sheet is removed after adhering the release sheet-attached resin film to a substrate.

For the present invention, furthermore, it is preferable that both the feature (II) and the feature (III) are realized.

An appropriate combination of an upper limit and a lower limit may be selected from those of the numeral ranges specified above.

EP 4 663 404 A1

EXAMPLES

The present invention is explained more specifically below with reference to examples. It should be noted that the present invention should not be construed as being limited to the examples given below.

1. Materials

<epoxy resin [A]>

- tetraglycidyl diaminodiphenylmethane (SUMI-EPOXY (registered trademark) ELM434, manufactured by Sumitomo Chemical Co., Ltd.)
- bisphenol F type liquid epoxy resin (EPICLON (registered trademark) 830, manufactured by DIC Corporation)

<thermoplastic resin [B]>

- polyethersulfone (Virantage (registered trademark) VW-10700RFP, manufactured by Solvay)

<curing agent [C]>

- 3,3'-diaminodiphenyl sulfone [3,3'-DAS] (manufactured by Mitsui Fine Chemical, Inc.)

<Particles>

- inorganic particles [D]

Inorganic particles having an average particle diameter of 32 $\mu$m, volume based median diameter of 40 $\mu$m, adsorption force of 2.4 mN/m, and density of 1.4 g/cm$^3$ were used. Of 40 particles observed under a microscope, 95% had a roundness of 1.1 or less.

<Particulate filler (not containing large-diameter particles)>

- polyamide particles (Orgasol (registered trademark) 1002D, manufactured by Arkema), containing no particles larger than 54 $\mu$m

<Release sheet>

- The release sheet used was a release paper including silicone as release agent and having a release resistance adjusted as shown in Table 1 by appropriately changing the silicone formulation, coating weight, conditions for drying and heat treatment after coating the release paper, etc.

2. Evaluation methods

One test run was performed (n = 1) for each evaluation item unless otherwise specified.

<Release resistance>

A rectangular sample of a release sheet having a width of 250 mm and a length of 90 mm is fixed on a flat surface, and then the surface of the sample was coated with a removable adhesive formed of an acrylic emulsion. This is performed in such a manner that the thickness of the coating liquid is 125 $\mu$m in a wet state immediately after the coating operation. The removable adhesive is baked and dried immediately after the coating operation by heating it at 100°C for 120 seconds. Next, a PET film is adhered onto the adhesive-coated surface of the dried release sheet. A rubber roller of 7.5 kg is moved back and forth once to allow the adhesion to be achieved under its own weight. Then, after allowing them to stand for 30 minutes in an atmosphere at 23°C and 50% RH, a test specimen with a width of 20 mm and a length of 250 mm is cut out, and the test specimen is subjected to 180° peel test by carrying out the same procedure as specified in JIS Z 0237:2009 "Testing Methods of Removable Adhesive Tapes and Removable Adhesive Sheets" except for adopting a peel speed of 1,000 mm/min. The simple average of the measured force values is adopted to represent the release resistance.

<Complex viscosity>

The complex viscosity is determined by simply heating a test specimen from 10°C at a temperature ramp rate of 2°C/min between parallel plates in a dynamic viscoelasticity measuring apparatus (ARES-G2, manufactured by TA Instruments), drawing a viscoelasticity curve based on measurements taken at a frequency of 77.25 Hz, plate gap of 0.5 mm, and strain of 0.17%, and reading the complex viscosity value at 25°C.

<Resin coverage rate of release sheet-attached resin film immediately after coating>

This is determined by observing a sample from the resin film side, examining the surface of the resin film at a magnification of 50x under a microscope, measuring the area of the part of the release sheet covered by the resin composition in a 10 mm $\times$ 10 mm unit square region of the resin film arbitrarily selected in the field of view under the microscope, and calculating the ratio of the measured area to the aforementioned unit area.

<Dewetting expansion rate on release sheet-attached resin film>

This is determined by observing the surface of a resin film prepared by coating a release sheet with a resin composition under a microscope at a magnification of 200x, examining a single arbitrarily selected dewetting spot region for fixed-point analysis, and calculating the ratio of the dewetting spot region measured 24 hours after the above coating operation to the area of the dewetting region measured immediately after the coating operation, which is expressed by the equation (2) given below. Ten dewetting spot regions were selected arbitrarily and observed to measure the area ratio defined above, and the average of the measurements taken was calculated.
[Mathematical formula 6]

$$\text{dewetting expansion rate} = \frac{\text{dewetting spot area 24 hours after coating of release sheet with resin composition}}{\text{dewetting spot area immediately after coating}} \qquad (2)$$

<Release rate of resin composition from release sheet>

A resin film is cut into a strip with a width of 25 mm and a length of 300 mm to prepare a test specimen. Then, as evaluation tape, a piece of Dampron Tape No. 3201R (manufactured by Nitto Denko Corporation, adhesive strength 8.1 N/25 mm) having the same shape as the test specimen with a width of 25 mm and a length of 300 mm cut out above is adhered to the resin-coated side of the test specimen under a 2 kg rubber roller moved back and forth once. A stainless steel support is adhered to the evaluation tape-attached surface of the test specimen using double-sided tape. Then, the support is mounted on a tensile tester, and the evaluation tape is peeled off in the longitudinal direction of the test specimen at a pulling speed of 10,000 mm/min in an atmosphere at 25°C and 50% RH. After peeling, the entire test specimen is photographed, and the image data are binarized, followed by measuring the area of the exposed portion of the release sheet, which is not covered by the resin composition, and dividing it by the overall area of the test specimen to give the release rate.

3. Preparation of release sheet-attached resin film

- Using a knife coater, a resin composition was spread over one side of a release sheet to prepare a release sheet-attached resin film. The average resin thickness A was 27 $\mu$m. In the inorganic particles [D], large-diameter particles having particle diameters larger than 2A ($\mu$m) (that is, larger than 54 $\mu$m) accounted for 11.8%.

[Examples 1 to 7] A resin composition was prepared using a kneader to knead, as raw materials, constituent compounds as specified in Table 1. The resulting resin composition was spread over one side of a release sheet to prepare a release sheet-attached resin film. The release resistance [X] of the release sheet, the complex viscosity [Y] of the resin composition at 25°C, the resin coverage rate of the release sheet-attached resin film immediately after coating, the dewetting expansion rate, and the release rate of the resin composition from the release sheet were measured. Results are shown in Table 1.

[Comparative Example 1] Except for using the same release sheet as in Example 4 and adjusting the release resistance [X] to a relatively low value as shown in Table 1, the same procedure as in Example 2 was carried out to provide a release sheet-attached resin film. In Comparative example 1, the complex viscosity [Y] failed to satisfy the relation $Y \geq 0.14e^{-7E-04X}$ (1)-3. For the resin coverage rate, dewetting expansion rate, and release rate of the resin composition from the release sheet, evaluations were made under the same conditions as in Examples 1 to 7. Results obtained are shown in Table 1.

[Comparative Example 2] Except for using the same release sheet as in Example 4 and adjusting the release resistance [X] to a relatively low value as shown in Table 1, the same procedure as in Example 3 was carried out to provide a release sheet-attached resin film. In Comparative example 2, the complex viscosity [Y] failed to satisfy the relation $Y \geq 0.14e^{-7E-04X}$ (1)-3. For the resin coverage rate, dewetting expansion rate, and release rate of the resin composition from the release sheet, evaluations were made under the same conditions as in Examples 1 to 7. Results obtained are shown in Table 1.

[Comparative Example 3] Except for using the same release sheet as in Example 7 and adjusting the content (in parts by mass) of the thermoplastic resin [B] to a low value as shown in Table 1, the same procedure as in Example 7 was carried out to provide a release sheet-attached resin film. In Comparative example 3, the complex viscosity [Y] failed to satisfy the relation $Y \geq 0.14e^{-7E-04X}$ (1)-3. For the resin coverage rate, dewetting expansion rate, and release rate of the resin composition from the release sheet, evaluations were made under the same conditions as in Examples 1 to 7. Results obtained are shown in Table 1.

[Table 1]

[Table 1]

| | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|
| release sheet | release resistance [X] [mN/20mm] | | 2770 | 2520 | 2520 | 770 | 813 | 813 | 3024 | 770 | 770 | 3024 |
| resin composition | epoxy resin [A] [parts by mass] | ELM434 | 80.0 | 80.0 | 80.0 | 80.0 | 80.0 | 80.0 | 80.0 | 80.0 | 80.0 | 80.0 |
| | | EPICLON830 | 20.0 | 20.0 | 20.0 | 20.0 | 20.0 | 20.0 | 20.0 | 20.0 | 20.0 | 20.0 |
| | thermoplastic resin [B] [parts by mass] | VW-10700RFP | 16.8 | 13.8 | 10.8 | 16.8 | 23.7 | 20.6 | 23.7 | 13.8 | 10.8 | 5.5 |
| | curing agent [C] [parts by mass] | 3,3'-DAS | 44.0 | 44.0 | 44.0 | 44.0 | 44.0 | 44.0 | 44.0 | 44.0 | 44.0 | 44.0 |
| | particles [D] [parts by mass] | inorganic particles | 22.0 | 22.0 | 22.0 | 22.0 | 22.0 | 45.0 | 22.0 | 22.0 | 22.0 | 42.0 |
| | filler [parts by mass] | Orgasol 1002D | 14.0 | 14.0 | 14.0 | 14.0 | 14.0 | 14.0 | 14.0 | 14.0 | 14.0 | 14.0 |
| | content of particles [D] in resin composition [mass%] | | 11.2 | 11.4 | 11.5 | 11.2 | 10.8 | 20.1 | 10.8 | 11.4 | 11.5 | 20.4 |
| | complex viscosity [Y] at 25°C [MPa·s] | | 0.130 | 0.069 | 0.035 | 0.130 | 0.227 | 0.136 | 0.227 | 0.069 | 0.035 | 0.007 |
| Y calculated by formula $0.14e^{-7E-04X}$ | | | 0.020 | 0.024 | 0.024 | 0.082 | 0.079 | 0.079 | 0.017 | 0.082 | 0.082 | 0.017 |
| Y calculated by formula $3.00e^{-7E-04X}$ | | | 0.432 | 0.514 | 0.514 | 1.750 | 1.698 | 1.698 | 0.361 | 1.750 | 1.750 | 0.361 |
| release sheet-attached resin film | resin coverage rate immediately after coating [%] | | 99 | 98 | 98 | 99 | 100 | 100 | 100 | 98 | 81 | 100 |
| | dewetting expansion rate [ratio] | | 1.6 | 3.8 | 4.0 | 2.8 | 1.2 | 1.2 | 1.1 | 6.8 | 1.5 | 8.7 |
| | release rate of resin from release sheet [%] | | 98 | 95 | 95 | 99 | 100 | 100 | 99 | 99 | 96 | 99 |

13

EP 4 663 404 A1

INDUSTRIAL APPLICABILITY

The resin film according to the present invention is suitably used in parts requiring thermal conductivity that are produced by laminating resin film layers, although the scope of its application is not limited thereto.

**Claims**

1.  A release sheet-attached resin film comprising a resin composition of the components [A] to [D] specified below and a release sheet with one side coated therewith, and having the feature (I) described below, wherein the component [D] is particles and accounts for 10 to 30 mass% of the resin composition:

    [A] epoxy resin,
    [B] thermoplastic resin
    [C] curing agent,
    [D] particles including large-diameter particles having diameters larger than 2A, wherein A denotes the average resin thickness in the resin film,
    (I) the release resistance [X] (mN/20 mm) of the surface of the release sheet to be coated with the resin and the complex viscosity [Y] (MPa·s) of the resin composition at 25°C are within the ranges defined by the following equations (1)-1 to (1)-4,

    [Mathematical formula 1]

    $$500 \leqq X \leqq 4000 \qquad (1)\text{-}1$$

    $$0.01 \leqq Y \leqq 2.1 \qquad (1)\text{-}2$$

    $$Y \geqq 0.14\ e^{-7 \times 10^{-4}\ x} \qquad (1)\text{-}3$$

    $$Y \leqq 3.00\ e^{-7 \times 10^{-4}\ x} \qquad (1)\text{-}4$$

2.  A release sheet-attached resin film as set forth in claim 1, wherein the particles [D] show a particle diameter distribution in which large-diameter particles account for a number based proportion of 10% to 30% of the total number of particles of [D].

3.  A release sheet-attached resin film as set forth in either claim 1 or 2, wherein the particles [D] are inorganic particles.

4.  A release sheet-attached resin film as set forth in either claim 1 or 2, wherein the particles [D] have spherical shape.

5.  A release sheet-attached resin film as set forth in either claim 1 or 2, wherein the average resin thickness A in the resin film is 50 $\mu$m or less.

6.  A release sheet-attached resin film as set forth in either claim 1 or 2, further having the feature (II) and the feature (III) specified below:

    (II) the resin coverage rate of the release sheet-attached resin film immediately after coating is 95% or more, and the dewetting expansion rate on the release sheet-attached resin film expressed by the following equation (2) is 6 or less, and
    [Mathematical formula 2]

    $$\text{dewetting expansion rate} = \frac{\text{dewetting spot area 24 hours after coating of release sheet with resin composition}}{\text{dewetting spot area immediately after coating}} \qquad (2)$$

    (III) the release rate of the resin composition from the release sheet is 95% or more.

7. A release sheet-attached resin film as set forth in claim 3, further having the feature (II) and the feature (III) specified below:

(II) the resin coverage rate of the release sheet-attached resin film immediately after coating is 95% or more, and the dewetting expansion rate on the release sheet-attached resin film expressed by the following equation (2) is 6 or less, and
[Mathematical formula 3]

$$\text{dewetting expansion rate} = \frac{\text{dewetting spot area 24 hours after coating of release sheet with resin composition}}{\text{dewetting spot area immediately after coating}} \quad (2)$$

(III) the release rate of the resin composition from the release sheet is 95% or more.

## INTERNATIONAL SEARCH REPORT

International application No.

**PCT/JP2024/012608**

### A. CLASSIFICATION OF SUBJECT MATTER

*B32B 27/00*(2006.01)i; *B32B 27/26*(2006.01)i; *B32B 27/38*(2006.01)i; *C08G 59/18*(2006.01)i; *C08J 5/18*(2006.01)i; *C08L 63/00*(2006.01)i; *C08L 101/00*(2006.01)i
FI:   B32B27/00 L; B32B27/26; B32B27/38; C08G59/18; C08J5/18 CFC; C08L63/00 Z; C08L101/00

According to International Patent Classification (IPC) or to both national classification and IPC

### B. FIELDS SEARCHED

Minimum documentation searched (classification system followed by classification symbols)

B32B27/00; B32B27/26; B32B27/38; C08G59/18; C08J5/18; C08L63/00; C08L101/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/013250 A1 (HITACHI CHEMICAL COMPANY, LTD.) 16 January 2020 (2020-01-16) | 1-7 |
| A | WO 2018/003694 A1 (TORAY INDUSTRIES, INC.) 04 January 2018 (2018-01-04) | 1-7 |
| A | WO 2020/040200 A1 (TORAY INDUSTRIES, INC.) 27 February 2020 (2020-02-27) | 1-7 |
| A | WO 2019/054486 A1 (TOYO INK SC HOLDINGS CO., LTD.) 21 March 2019 (2019-03-21) | 1-7 |
| A | JP 2022-83529 A (MITSUBISHI ELECTRIC CORPORATION) 06 June 2022 (2022-06-06) | 1-7 |

☐ Further documents are listed in the continuation of Box C.          ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **14 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

# EP 4 663 404 A1

| INTERNATIONAL SEARCH REPORT<br>Information on patent family members | | International application No.<br>**PCT/JP2024/012608** |
|---|---|---|

| Patent document<br>cited in search report | | | Publication date<br>(day/month/year) | Patent family member(s) | | | Publication date<br>(day/month/year) |
|---|---|---|---|---|---|---|---|
| WO | 2020/013250 | A1 | 16 January 2020 | US | 2021/0269679 | A1 | |
| | | | | CN | 112385016 | A | |
| | | | | KR | 10-2021-0030931 | A | |
| WO | 2018/003694 | A1 | 04 January 2018 | US | 2019/0210301 | A1 | |
| | | | | EP | 3476886 | A1 | |
| | | | | CN | 109196026 | A | |
| | | | | KR | 10-2019-0022461 | A | |
| WO | 2020/040200 | A1 | 27 February 2020 | US | 2021/0292545 | A1 | |
| | | | | EP | 3842481 | A1 | |
| | | | | CN | 112543783 | A | |
| | | | | KR | 10-2021-0045995 | A | |
| WO | 2019/054486 | A1 | 21 March 2019 | US | 2020/0275581 | A1 | |
| | | | | CN | 111095538 | A | |
| | | | | KR | 10-2020-0054216 | A | |
| JP | 2022-83529 | A | 06 June 2022 | CN | 114552840 | A | |

Form PCT/ISA/210 (patent family annex) (July 2022)

**REFERENCES CITED IN THE DESCRIPTION**

**Patent documents cited in the description**

- JP 2012162680 A
- JP 2016160367 A